# EUROPEAN PATENT SPECIFICATION

(11) **EP 3 853 583 B1**
(45) Date of publication and mention of the grant of the patent: **23.07.2025**
(21) Application number: 19861317.6
(22) Date of filing: 19.09.2019
(51) Int. Cl.: G01N 15/05, G01N 21/90, G01N 15/02, G06T 7/00, G01N 21/00, G06T 7/73, G06T 7/11

(54) **VISUALIZATION ANALYSIS APPARATUS AND VISUAL LEARNING METHODS**
VISUALISIERUNGSANALYSEVORRICHTUNG UND VERFAHREN ZUM VISUELLEN LERNEN
APPAREIL D'ANALYSE DE VISUALISATION ET PROCÉDÉS D'APPRENTISSAGE VISUEL

(30) Priority: 20.09.2018 US 201862733972 P
(43) Date of publication of application: 28.07.2021
(73) Proprietor: Siemens Healthcare Diagnostics, Inc., Tarrytown, NY 10591 (US)
(72) Inventor: NALAM VENKAT, Rayal Raj Prasad, Princeton, New Jersey 08542 (US); POLLACK, Benjamin S., Jersey City, New Jersey 07302 (US); CHANG, Yao-Jen, Princeton, New Jersey 08540 (US); SINGH, Vivek, Princeton, New Jersey 08540 (US); NARASIMHAMURTHY, Venkatesh, Hillsborough, New Jersey 08844 (US)
(74) Representative: Schweitzer, Klaus
(86) International application number: PCT/US2019/052011
(87) International publication number: WO 2020/061368

(56) References cited:
- WO-A1-2017/132172
- WO-A1-2017/132172
- WO-A1-2018/022280
- US-A1- 2014 193 050
- KELVIN XU ET AL: "Show, Attend and Tell: Neural Image Caption Generation with Visual Attention", ARXIV.ORG, CORNELL UNIVERSITY LIBRARY, 201 OLIN LIBRARY CORNELL UNIVERSITY ITHACA, NY 14853, 10 February 2015 (2015-02-10), XP080677655
- KAREN SIMONYAN ET AL: "Deep Inside Convolutional Networks: Visualising Image Classification Models and Saliency Maps", 20 December 2013 (2013-12-20), XP055541250, Retrieved from the Internet <URL:https://arxiv.org/pdf/1312.6034.pdf>
- RUTH FONG ET AL: "Interpretable Explanations of Black Boxes by Meaningful Perturbation", ARXIV.ORG, CORNELL UNIVERSITY LIBRARY, 201 OLIN LIBRARY CORNELL UNIVERSITY ITHACA, NY 14853, 11 April 2017 (2017-04-11), XP081305661, DOI: 10.1109/ICCV.2017.371
- BOLEI ZHOU ET AL: "Learning Deep Features for Discriminative Localization", 2016 IEEE CONFERENCE ON COMPUTER VISION AND PATTERN RECOGNITION (CVPR), June 2016 (2016-06-01), pages 2921 - 2929, XP055553355, ISBN: 978-1-4673-8851-1, DOI: 10.1109/CVPR.2016.319

## Description

### FIELD

Embodiments of this disclosure relate to methods and apparatus for characterizing a specimen in an automated diagnostic analysis system.

### BACKGROUND

Automated diagnostic analysis systems are known from, for example, WO 2018/022280 A1 or WO 2017/132172 A1 and may conduct assays or clinical chemistry analyses using one or more reagents to identify an analyte or other constituent in a bio-liquid specimen (e.g., a serum or plasma portion of a centrifuged whole blood sample). Improvements in automated testing technology have been accompanied by corresponding advances in pre-analytical specimen preparation and handling operations such as sorting, batch preparation, centrifuging of specimen containers to separate specimen components, cap removal to facilitate fluid access, pre-screening such as for HILN (Hemolysis, Icterus, and/or Lipemia, or Normal) determination, and the like, by automated specimen preparation systems referred to as Laboratory Automation Systems (LASs). LASs may also automatically transport specimens in specimen containers to a number of specimen processing stations so various operations (e.g., pre-analytical and/or analytical testing) can be performed thereon.

The automated pre-screening may be performed by an automated machine-vision inspection apparatus. The HILN pre-screening involves automated detection of an interferent, such as H, I, and/or L, in a serum or plasma portion in a fractionated whole blood specimen (e.g., a centrifuged specimen). The pre-screening may also involve determining a volume of one or more constituents (e.g., of the serum or plasma portion or settled red blood cell portion), tube type and/or size of a specimen container, whether the tube is capped, the cap type, the status of labels on the specimen container, and other determinations.

### SUMMARY

The present invention is set out in the appended claims. Roughly speaking, in a first aspect, a method of identifying objects of a specimen container is provided. The method includes capturing one or more images of the specimen container, the one or more images including one or more objects of the specimen container and specimen, the capturing generating pixel data from a plurality of pixels; identifying one or more selected objects from the one or more objects using one or more neural networks; displaying an image of the specimen container; and displaying, on the image of the specimen container, one or more locations of pixels used by the one or more neural networks to identify the one or more selected objects.

In a second aspect, a quality check module is provided. The quality check module includes one or more image capture devices operative to capture one or more images from one or more viewpoints of a specimen container, wherein capturing one or more images generates pixel data from a plurality of pixels, and a computer coupled to the one or more image capture devices. The computer is configured and operable (capable of being operated) to: identify one or more selected objects from one or more objects of the specimen container using one or more neural networks; display an image of the specimen container; and display, on the image of the specimen container, one or more locations of pixels used by the one or more neural networks to identify the one or more selected objects.

In another aspect, a specimen testing apparatus is provided. The specimen testing apparatus includes a track; a carrier moveable on the track and configured to contain a specimen container containing a serum or plasma portion of a specimen therein; a plurality of image capture devices arranged around the track and operative to capture one or more images from one or more viewpoints of the specimen container and the serum or plasma portion of the specimen, wherein capturing one or more images generates pixel data including a plurality of pixels; and a computer coupled to the plurality of image capture devices. The computer is configured and operative to: identify one or more selected objects from one or more objects of the specimen container using one or more neural networks; display an image of the specimen container; and display, on the image of the specimen container, one or moxre locations of pixels used by the one or more neural networks to identify the one or more selected objects.

Coming back to known approaches, WO 2018/022280 A1 discloses a model-based method of determining physical attributes of a specimen container cap to identify the container cap. In this method, several backlit images of a specimen container including a container cap are captured at different exposure lengths and a plurality of different wavelengths. Optimally exposed pixels are selected from the images to generate optimally exposed image data for each nominal wavelength. The optimally exposed pixels are then classified as being a tube, a label or a cap. The shape of the container cap is identified based upon the pixels classified as being the cap and the image data for each nominal wavelength. Further disclosed is a quality check module adapted to identify a specimen container cap. It comprises a plurality of cameras arranged around an imaging location adapted to receive a specimen container including a cap. The cameras are configured to capture multiple backlit images of at least a portion of the specimen container at different exposure lengths and different wavelengths.

### BRIEF DESCRIPTION OF THE DRAWINGS

The drawings, described below, are for illustrative purposes and are not necessarily drawn to scale. Accordingly, the drawings and descriptions are to be regarded as illustrative in nature, while the invention is defined by the appended claims.
FIG. 1A illustrates a schematic top view of a specimen testing apparatus including one or more quality check modules configured to carry out visual (optical) analysis methods according to one or more embodiments.
FIG. 1B illustrates a schematic top view of a quality check module (with top shown as removed) including multiple viewpoints of a specimen container, the quality check module configured to capture and analyze multiple backlit images of the specimen container according to one or more embodiments.
FIG. 1C illustrates a schematic side view of the quality check module of FIG. 1B (with front enclosure wall removed) taken along section line 1C-1C of FIG. 1B according to one or more embodiments.
FIG. 2A illustrates a side view of a capped specimen container including a separated specimen including a serum or plasma portion and a settled blood portion according to one or more embodiments.
FIG. 2B illustrates a side view of a capped specimen container located in a carrier, the specimen container including a separated specimen with a serum or plasma portion and a settled blood portion according to one or more embodiments.
FIG. 3 illustrates a flowchart depicting processing that may be performed by a computer on pixel data generated by image capture devices in a quality check module according to one or more embodiments.
FIG. 4A illustrates a segmented side view of the capped specimen container of FIG. 2A including a segmented specimen, air gap, and cap according to one or more embodiments.
FIG. 4B illustrates a segmented side view of the capped specimen container of FIG. 2B including a segmented specimen, air gap, specimen carrier, and cap according to one or more embodiments.
FIG. 5A illustrates objects of the segmented image of FIG. 4A displayed on a display according to one or more embodiments.
FIG. 5B illustrates objects of the segmented image of FIG. 4B, which includes a displayed carrier, displayed on a display according to one or more embodiments.
FIG. 5C illustrates a displayed image including an image of a specimen container with an overlaid activation map, wherein algorithms used the correct regions of a captured image to identify a cap according to one or more embodiments.
FIG. 5D illustrates a displayed image including an image of a specimen container with an overlaid activation map, wherein algorithms used incorrect regions of a captured image to identify a cap according to one or more embodiments.
FIG. 6 illustrates an apparatus and functional flowchart of a method of segmenting an image according to one or more embodiments.
FIG. 7 illustrates an apparatus and functional flowchart describing a characterization method, wherein many objects in an image of a specimen container are characterized or classified according to one or more embodiments.
FIG. 8 illustrates a flowchart describing another characterization method according to one or more embodiments.

### DETAILED DESCRIPTION

Automated diagnostic analysis systems may conduct assays or clinical chemistry analyses using one or more reagents to identify an analyte or other constituent in a specimen such as urine, blood serum, blood plasma, interstitial liquid, cerebrospinal liquid, and the like. Such specimens are usually contained within specimen containers (e.g., specimen collection tubes). The testing reactions generate various changes that may be read and/or manipulated to determine a concentration of an analyte or other constituent present in the specimen.

For certain tests, a biological liquid such as a serum or plasma portion (obtained from whole blood by centrifugation) may be analyzed. When the specimen is whole blood, a gel separator may be added to the specimen container to aid in the separation of a settled blood portion from the serum or plasma portion. A void, such as a vacuum or air gap, may be located between the serum or plasma portion and a top of the specimen container. The specimen container may be a tube and may or may not be capped by a specific type of cap having a specific color or other cap identifier. In addition, the specimen container may be located in a specimen carrier that transports the specimen container to various locations, such as throughout the automated diagnostic analysis system.

During a pre-processing operation, the specimen container may be analyzed to determine certain properties of the specimen container and/or the specimen located therein. The pre-processing may include machine-vision inspection that uses optics and artificial intelligence to determine the properties of the specimen container and/or the specimen located therein. One or more image capture devices may capture one or more images of the specimen container and generate pixel data (e.g. image data) representative of an image of the specimen container. A computer receives the pixel data and may segment the image. The segmentation may involve classifying the pixels in to one or more classes that may correspond to objects contained in the image, such as the specimen (e.g., serum or plasma portion, settled blood portion, gel separator), specimen container (e.g., tube) and/or a cap located thereon. The classes of pixels may correspond to different objects of the specimen container. For example, a first class of pixels may be used by one or more neural networks to identify a cap of the specimen container and a second class of pixels may be used by one or more neural networks to identify a serum or plasma portion of the specimen.

A neural network (e.g., a trained neural network), such as a convolutional neural network (CNN) or other suitable neural network, may analyze the different classes of pixels to determine the properties of the specimen container and/or the specimen located therein. With regard to the examples described above, the neural network may analyze the first class of pixels and determine whether the specimen container is capped. If so, the neural network may further determine the color of the cap and/or the type of cap. The neural network may analyze the second class of pixels and determine that they are a serum or plasma portion of the specimen. The neural network may further analyze the second class of pixels to determine whether the serum or plasma portion contains hemolysis, icterus, and/or lipemia, or is normal. Based on the analysis of the pixel data, the machine-vision inspection apparatus can output certain information identifying the specimen and/or specimen container properties.

A user, such as a laboratory technician, may receive the information generated by the machine-vision inspection apparatus. In conventional systems, the automated machine inspection apparatus are black box structures in that they only provide output information to users about the determinations made by the automated inspection apparatus and do not provide any criteria as to how the determinations were derived. Thus, users may not be certain as to how determinations by automated machine inspection apparatus are made. For example, conventional machine-vision inspection apparatus only output the specimen and/or specimen container properties and not information as to the analysis used to derive the properties. Thus, the user may not be certain that the determinations reached by the machine-vision inspection are, in fact, correct.

In view of these deficiencies, the machine-vision inspection apparatus and methods disclosed herein provide information as to how specimen and/or specimen container properties were determined. Thus, a user may be certain that the machine-vision inspection apparatus analyzed a correct portion of an image when it determined the properties of the specimen and/or the specimen container. The machine-vision inspection apparatus and methods disclosed herein may provide visual information regarding the locations of the classes of pixels used to determine the properties of the specimen and/or the specimen container. For example, the machine-vision inspection apparatus may display an image at least partially representing the specimen container. The displayed image may include delineated regions that correspond to regions of identified objects in the captured image where the different classes of pixels are located. In some embodiments, the displayed image may include different colors of pixels, different intensities of pixels, or other suitable markings (e.g., dotted or colored borders, hatching, shading, and the like) corresponding to locations of pixels in the original image that were used by the apparatus to identify certain objects in the original image.

In some embodiments, the machine-vision inspection apparatus may generate an activation map, which is an image that may provide a score as to how important each pixel in an image was toward making a determination, such as identifying an object. In some embodiments, an activation map may provide locations of pixels used during identification. Activation maps may be referred to as saliency maps, learned feature visualizations, occlusion maps, and class activation maps. In some embodiments, the brightness of pixels represented in an activation map are dependent on the usefulness of the pixels in making the determination. For example, the brighter pixels in an activation map may be pixels providing more useful information and dimmer pixels may be pixels providing less useful information or no information. In some embodiments, an image of the specimen container overlaid with an activation map may be displayed for a user.

Referring to the above examples, in some embodiments, the displayed image may include a first highlighted or otherwise delineated region indicating where the first class of pixels are located. In a first example, the first class of pixels are located in a cap region of the specimen container. Accordingly, a cap region of the displayed image may be delineated or otherwise distinguished to show that the first class of pixels are in the cap region and the cap properties were derived from those particular pixels. Another displayed image may include a second delineated region indicating a physical location of a second class of pixels. In this example, the second class of pixels can be located in the serum or plasma region of the specimen. Accordingly, a serum or plasma portion of the displayed image may be delineated to show that the second class of pixels are in the serum or plasma region of the displayed image. Delineated portions of the image are portions of the image that are readily distinguishable from other portions of the image by some feature highlighting that object. Delineating respective portions (e.g., a delineated object) may include coloring or darkening a portion of an image such as by providing a darkened (e.g., bolded) or colored border, providing a fill of the portion of the image such as a hatched fill pattern or other fill pattern, or displaying only the portion of the image, providing a unique color and/or using a unique shading and the like. Delineation may be accomplished by superimposing any suitable graphic on the displayed image or replacing the portion with a graphic. The delineating respective portions may flash or otherwise change in intensity in some embodiments.

In other embodiments, the delineated image may include the activation map overlaid onto the original image or a representation of the original image. Different pixel intensities, such as brighter pixels may indicate pixels that were more useful in making the determinations and/or identifications. In some embodiments, the brighter pixels or regions consisting of brighter pixels constitute the delineated portions of the image.

The delineated portion(s) of the displayed image provides the user with confidence that the machine-vision inspection apparatus has analyzed the correct portion of the image when it made a determination regarding a property and/or location of an object of, or contained in, the specimen container. For example, the displayed image may delineate the cap region of the specimen container when the machine-vision inspection apparatus provides information regarding the cap, such as the color thereof and possibly what that color denotes, and/or the cap type. The user is then confident that the machine-vision inspection apparatus did not analyze other regions, such as the serum or plasma region, air gap, or another geometric feature, when it identified the cap.

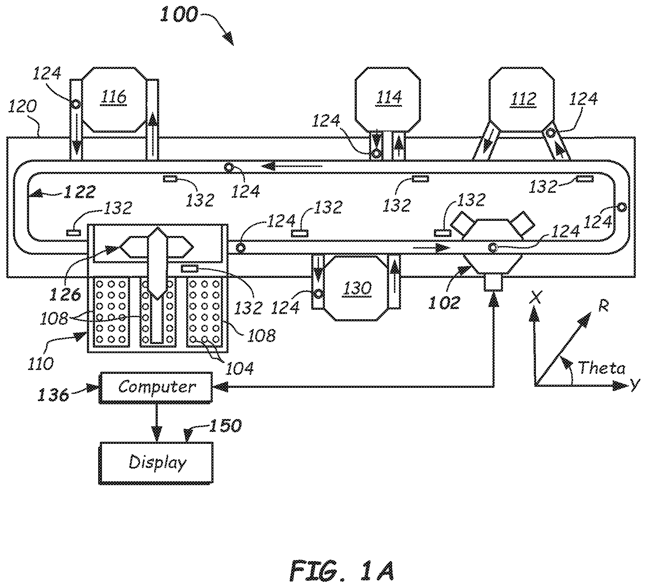

Further details of characterization and visual verification methods, apparatus, systems, and quality check modules configured to carry out the characterization and visual verification methods, as well as specimen testing apparatus including one or more quality check modules will be further described with reference to FIGS. 1A-8 herein.

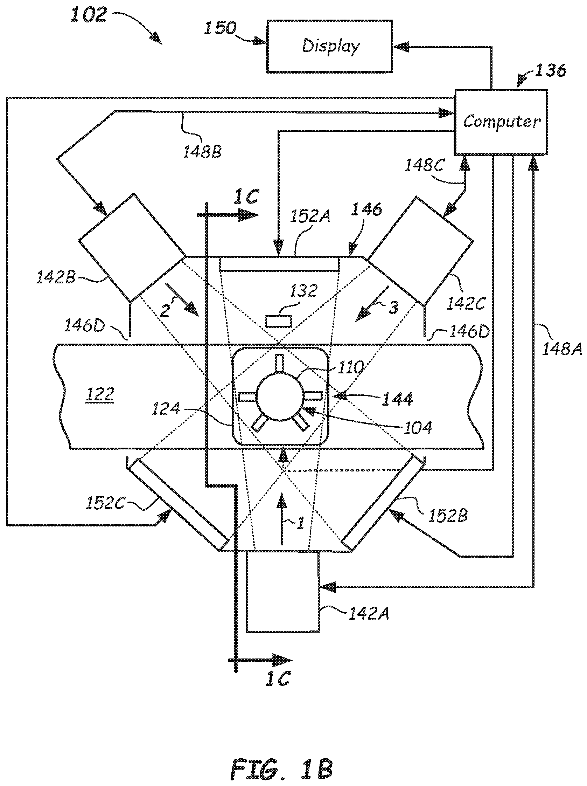

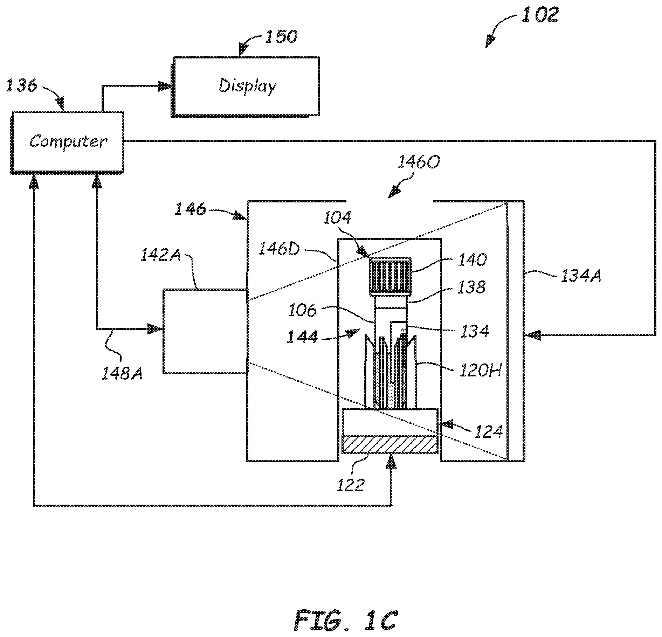

Reference is now made to FIGs. 1A-1C. FIG. 1A illustrates a specimen testing apparatus 100 capable of automatically processing multiple specimen containers 104 containing specimens 106 (FIG. 1C) therein. FIG. 1B illustrates a schematic top view of a quality check module 102 (with top removed) including multiple viewpoints of a specimen container 104 and configured to capture and analyze multiple images of the specimen container 104 according to one or more embodiments. FIG. 1C illustrates a schematic side view of the quality check module 102 (with a front enclosure wall removed) of FIG. 1B taken along section line 1C-1C of FIG. 1B according to one or more embodiments. The specimen containers 104 may be provided in one or more racks 108 at a loading area 110 prior to transportation to, and analysis by, one or more analyzers (e.g., first analyzer 112, second analyzer 114, and/or third analyzer 116) arranged about the specimen testing apparatus 100. More or less numbers of analyzers may be used. The analyzers may be any combination of clinical chemistry analyzers and/or assaying instruments, or the like. Other suitable processing devices may be provided in the specimen testing apparatus 100. The specimen containers 104 may be any suitably transparent or translucent container, such as a blood collection tube, test tube, sample cup, cuvette, or other clear or opaque glass or plastic container capable of containing and allowing imaging of the specimen 106 contained therein. The specimen containers 104 may be varied in size (e.g., height and/or diameter).

In more detail, the specimen testing apparatus 100 may include a base 120 (e.g., a frame, floor, or other structure) upon which a track 122 may be mounted or supported. The track 122 may be a railed track (e.g., a mono rail or a multiple rail), a collection of conveyor belts, conveyor chains, moveable platforms, or any other suitable type of conveyance mechanism. The track 122 may be circular or any other suitable shape and may be a closed track (e.g., endless track) in some embodiments. The track 122 may, in operation, transport individual ones of the specimen containers 104 to various locations spaced about the track 122 in carriers 124.

The carriers 124 may be passive, non-motored pucks that may be configured to carry specimen containers 104 on the track 122 or optionally, an automated carrier including an onboard drive motor, such as a linear motor that is programmed to move about the track 122 and stop at pre-programmed locations. Other configurations of the carriers 124 may be used. In some embodiments, the carriers 124 may leave from the loading area 110 after being offloaded from the one or more racks 108. The loading area 110 may serve a dual function of also allowing reloading of the specimen containers 104 from the carriers 124 to the loading area 110 after pre-screening and/or analysis is completed. Otherwise, the specimen containers 104 may be discarded.

A robot 126 may be provided at the loading area 110 and may be configured to grasp the specimen containers 104 from the one or more racks 108 and load the specimen containers 104 onto the carriers 124, such as onto an input lane of the track 122. The robot 126 may also be configured to reload specimen containers 104 from the carriers 124 to the one or more racks 108 or otherwise discard the specimen containers 104. The robot 126 may include one or more (e.g., at least two) robot arms or components capable of X (lateral) and Z (vertical - out of the page, as shown), or X, Y, and Z, or r (radial) and Z (vertical), theta (rotational) and Z (vertical) motion. The robot 126 may be a gantry robot, an articulated robot, an R-theta robot, a theta-Z robot, or other suitable robot wherein the robot 126 may be equipped with robotic gripper fingers oriented, sized, and configured to pick up and place the specimen containers 104.

Upon being loaded onto the track 122, the specimen containers 104 carried by carriers 124 may progress to one or more pre-processing modules, as a pre-processing module 130. For example, the pre-processing module 130 may be an automated centrifuge configured to carry out fractionation of the specimen 106. Carriers 124 carrying specimen containers 104 may be diverted to the pre-processing module 130 by an inflow lane or other suitable robot. After being centrifuged, the specimen containers 104 may exit on an outflow lane, or otherwise be removed by a robot, and continue along the track 122. In the depicted embodiment, the specimen containers 104 in carriers 124 may next be transported to the quality check module 102 to carry out pre-screening, as is further described herein. Additional station(s) may be provided at one or more locations on or along the track 122. The additional station(s) may include a de-capping station, aliquoting station, one or more additional pre-processing modules 130, one or more additional quality check modules 102, and the like.

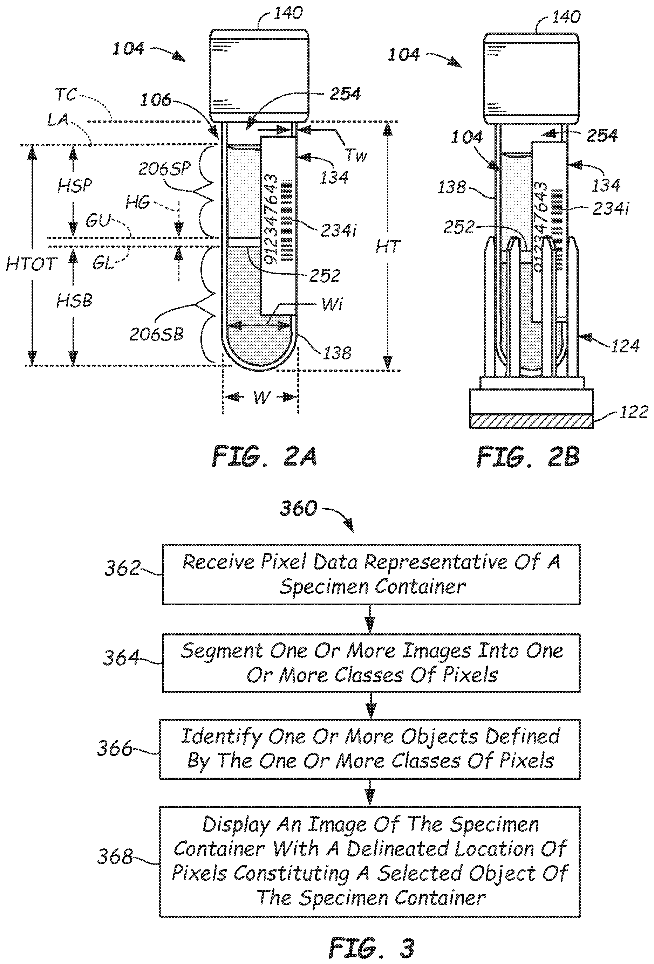

The specimen testing apparatus 100 may include a plurality of sensors 132 at one or more locations around the track 122. The sensors 132 may be used to detect locations of specimen containers 104 on the track 122 by means of reading identification information 234i (FIG. 2A) or like information (not shown) provided on each specimen container 104. Any suitable means for tracking the location may be used, such as proximity sensors, RFID sensors, or the like. All of the sensors 132 may interface with a computer 136, so that the location of each specimen container 104 may be known at all times.

The pre-processing stations and the analyzers 112, 114, and 116 may be equipped with robotic mechanisms and/or inflow lanes configured to remove the carriers 124 from the track 122, and with robotic mechanisms and/or outflow lanes configured to reenter the carriers 124 to the track 122.

The specimen testing apparatus 100 may be controlled by the computer 136, which may be a microprocessor-based central processing unit (CPU), having a suitable memory and suitable conditioning electronics and drivers for operating the various system components. The computer 136 may be housed as part of, or separate from, the base 120 of the specimen testing apparatus 100. The computer 136 may operate to control movement of the carriers 124 to and from the loading area 110, motion about the track 122, motion to and from the pre-processing module 130 as well as operation of the pre-processing module 130 (e.g., centrifuge), motion to and from the quality check module 102 as well as operation of the quality check module 102, and motion to and from each analyzer 112, 114, 116 as well as operation of each analyzer 112, 114, 116 for carrying out the various types of testing (e.g., assay or clinical chemistry). The computer 136 may also perform other functions, such as executing one or more neural networks as described herein. In some embodiments, separate computers may be associated with each of the components and they all may interface with one another through a local server and/or a communication link, such as an Ethernet.

Reference is now made to FIGS. 1B and 1C, which illustrate an embodiment of the quality check module 102 configured to carry out the characterization and visual verification methods as shown and described herein. The quality check module 102 may be configured to pre-screen specimen containers 104 and/or specimens 106 located therein. The pre-screening may determine several properties of the specimen containers 104 and/or the specimens 106 located therein. For example, a specimen container 104 may include a tube 138 wherein a cap 140 may be receivable on the tube 138 to seal the tube 138. The pre-screening may determine whether the cap 140 is located on the tube 138 and, if so, the color and/or type of cap 140. The pre-screening may also analyze the specimen 106 for the presence of an interferent, such as hemolysis, icterus, and lipemia therein and possibly a degree (e.g., index) of the particular interferent present. The pre-screening may analyze the specimen 106 and/or the specimen container 104 to determine other properties such as tube type, tube height, tube diameter and the like, as described below.

The quality check module 102 may include one or more image capture devices 142A, 142B, 142C. Three image capture devices 142A-142C are shown in FIG. 1B, but optionally two or four or more can be used. The image capture devices 142A-142C may be any suitable device(s) for capturing well-defined digital images, such as conventional digital cameras capable of capturing pixelated images, charged coupled devices (CCD), an array of photodetectors, one or more complementary metal oxide semiconductor (CMOS) sensors, or the like. The three image capture devices 142A-142C illustrated in FIG. 1B are configured to capture images from three different lateral viewpoints (viewpoints labeled 1, 2, and 3). In some embodiments, the captured image size may be about 2560 x 694 pixels (e.g., height x width). In other embodiments, the image capture devices 142A-142C may capture an image size that may be about 1280 x 387 pixels, for example. Other image sizes may be captured.

Each of the image capture devices 142A-142C may be configured and operable to capture lateral images of at least a portion of the specimen container 104, and at least a portion of the specimen 106 located therein. The image capture devices 142A-142C may generate image data or pixel data representative of the captured images. In the embodiment shown, the plurality of image capture devices 142A-142C may be configured to capture lateral images of the specimen container 104 and/or the specimen 106 at an imaging location 144 from the multiple viewpoints 1-3. The viewpoints 1-3 may be arranged so that they are approximately equally spaced from one another, such as about 120° from one another, as shown. As depicted, the image capture devices 142A-142C may be arranged around the track 122 on which the specimen container 104 is transported. In this way, the images of the specimen 106 in the specimen container 104 may be captured while the specimen container 104 is residing in a carrier 124 at the imaging location 144. The field of view of the multiple images obtained by the image capture devices 142A-142C may overlap slightly in a circumferential extent. Other arrangements of the plurality of image capture devices 142A-142C may be used.

In one or more embodiments, the carrier 124 may be stopped at a pre-determined location in the quality check module 102, such as at the imaging location 144. At his location, normal vectors from each of the image capture devices 142A-142C intersect each other. A gate or a linear motor (not shown) of the carrier 124 may be provided to stop the carrier 124 at the imaging location 144, so that multiple images may be captured thereat. In some embodiments, such as where there is a gate at the quality check module 102, one or more sensors 132 may be used to determine the presence of the carrier 124 at the quality check module 102.

In some embodiments, the quality check module 102 may include a housing 146 that may at least partially surround or cover the track 122 to minimize outside lighting influences. The specimen container 104 may be located inside the housing 146 during the image-capturing sequences. The housing 146 may include one or more openings and/or doors 146D to allow the carriers 124 to enter into and/or exit from the housing 146. In some embodiments, a ceiling of the housing 146 may include an opening 146O to allow a specimen container 104 to be loaded into the carrier 124 by a robot (not shown) from above, such as when the quality check module 102 is located off the track 122.

The image capture devices 142A-142C may be provided in close proximity to and trained or focused to capture an image window at the imaging location 144, wherein the image window is an area including an expected location of the specimen container 104. Thus, the specimen container 104 may be stopped so that it is approximately located in a center of the image window in some embodiments, prior to image capture. For example, the image capture devices 142A-142C may capture a part or all of a label 134 affixed to the specimen container 104 and part or all of the specimen 106 located therein. In some instances, part of at least one of the viewpoints 1-3 may be partially occluded by the label 134. In some instances, one or more of the viewpoints 1-3 may be fully occluded, i.e., no clear view of the serum or plasma portion 206SP (FIG. 2A) of the specimen 106 may be possible. However, even in cases where a side (front side or back side) of a viewpoint 1-3 is fully occluded by one or more labels 134, the characterization methods may still be able to distinguish the boundaries of different portions of the specimen through the one or more labels 134.

In operation of the quality check module 102, each image may be captured in response to a triggering signal provided in communication lines 148A, 148B, 148C that may be transmitted by the computer 136. Each of the captured images may be processed by the computer 136 according to one or more embodiments described herein. The computer 136 may be coupled to a display 150 that may display images, including computer-generated images of the specimen container 104 and the specimen 106. In some embodiments, high dynamic range (HDR) processing may be used to capture and process the image data from the captured images. For example, multiple images of the specimen 106 may be captured at the quality check module 102 at multiple different exposures (e.g., at different exposure times), while being sequentially illuminated at one or more different spectra. For example, each image capture device 142A-142C may capture 4-8 images of the specimen container 104 including a serum or plasma portion 106SP (FIG. 2A) at different exposure times at each of multiple illumination spectra. For example, 4-8 images may be captured by image capture device 142A at viewpoint 1 while the specimen 106 is backlight illuminated with light source 152A that has a red spectrum. Additional like images may be captured sequentially at viewpoints 2 and 3.

In some embodiments, capturing the multiple spectral images may be accomplished using different light sources 152A, 152B, and 152C emitting different spectral illumination. The light sources 152A-152C may back light the specimen container 104 (as shown). A light diffuser (not shown) may be used in conjunction with the light sources 152A-152C in some embodiments. The multiple different spectra light sources 152A-152C may be red, green, blue (RGB) light sources, such as light-emitting diodes (LEDs) emitting nominal wavelengths of 634nm +/- 35nm (red), 537nm +/- 35nm (green), and 455nm +/-35nm (blue). In other embodiments, the light sources 152A-152C may be white light sources. In cases where the label 134 obscures multiple viewpoints, infrared (IR) backlighting or near infrared (NIR) backlighting may be used. Furthermore, RGB light sources may be used in some instances even when label occlusion is present. In other embodiments, the light sources 152A-152C may emit one or more spectra having a nominal wavelength between about 700 nm and about 1200 nm.

By way of a non-limiting example, to capture images at a first wavelength, three light sources 152A-152C emitting red light (wavelength of about 634 nm +/- 35 nm) may be used to sequentially illuminate the specimen 106 from three lateral locations. The red illumination by the light sources 152A-152C may occur as the multiple images (e.g., 4-8 images or more) at different exposure times are captured by each image capture device 142A-142C from each of the three viewpoints 1-3. In some embodiments, the exposure times may be between about 0.1 ms and 256 ms. Other exposure times may be used. In some embodiments, each of the respective images for each of the image capture devices 142A-142C may be captured sequentially, for example. Thus, for each viewpoint 1-3, a group of images may be sequentially captured that have red spectral backlit illumination and multiple exposures (e.g., 4-8 exposures) at different exposure times. The images may be captured in a round robin fashion, for example, where all images from viewpoint 1 are captured followed sequentially by viewpoints 2 and 3.

Once the red backlit illuminated images are captured in the embodiment of FIGs. 1B-1C, another spectra of light, for example, green spectral light (nominal wavelength of about 537 nm with a bandwidth of about +/- 35 nm) may be emitted by the light sources 152A-152C, and multiple images (e.g., 4-8 or more images) at different exposure times may be sequentially captured by each of the image capture devices 142A-142C. This procedure may be repeated with blue spectral light emitted by the light sources 152A-152C for each of the image capture devices 142A-142C. The different nominal wavelength spectral light emitted by light sources 152A-152C may be accomplished by light panels including banks of different desired spectral light sources (e.g., R, G, B, W, IR, and/or NIR) that can be selectively turned on and off, for example. Other means for backlighting may be used.

In some embodiments, the multiple images captured at multiple exposures (e.g., exposure times) for each respective wavelength spectra may be captured in rapid succession, such that the entire collection of backlit images for the specimen container 104 and specimen 106 from multiple viewpoints 1-3 may be captured in less than a few seconds, for example. In some embodiments, four different exposure images for each wavelength at the three viewpoints 1-3 using the image capture devices 142A-142C and back lighting with light sources 152A-152C, which may be RGB light sources, results in 4 images x 3 spectra x 3 image capture devices = 36 images. In another embodiment, four different exposure images for each wavelength at the three viewpoints 1-3 using the image capture devices 142A-142C and back lighting with light sources 152A-152C, which may be R, G, B, W, IR, and NIR light sources, results in 4 images x 6 spectra x 3 cameras = 72 images. Other numbers of images may be captured.

According to embodiments of the characterization and visual verification methods, the processing of the image data or pixel data by computer may involve image pre-processing including, for example, selection of optimally-exposed pixels from the multiple captured images at the different exposure times at each wavelength spectrum and for each image capture device 142A-142C, so as to generate optimally-exposed pixel data for each spectrum and for each viewpoint 1-3.

For each corresponding pixel (or patch of pixels) from each of the images captured by each of the image capture devices 142A-142C, pixels (or patches of pixels) exhibiting optimal image intensity may be selected from each of the different exposure images for each viewpoint 1-3. In some embodiments, optimal image intensity may be determined by the number of pixels (or patches pixels) that fall within a predetermined range of intensities, such as between 180 and 254 on a scale of 0-255, for example. In another embodiment, optimal image intensity may be between 16 and 254 on a scale of 0-255, for example. If more than one pixel (or patch of pixels) in the corresponding pixel (or patch of pixels) locations of two exposure images is determined to be optimally exposed, the image with the higher overall intensity may be selected.

The selected pixels (or patches of pixels) exhibiting optimal image intensity may be normalized by their respective exposure times. The result is a plurality of normalized and consolidated spectral image data sets for the illumination spectra (e.g., R, G, B, white light, IR, and/or NIR - depending on the combination used) and for each image capture device 142A-142C where all of the pixels (or patches of pixels) are optimally exposed (e.g., one image data set per spectrum) and normalized. In other words, for each viewpoint 1-3, the data pre-processing carried out by the computer 136 may result in a plurality of optimally-exposed and normalized image data sets, one for each illumination spectra employed.

Processing of the pixel data may further involve segmenting the pixelated images. For example, segmenting may involve classifying pixels within the pixel data as representing different objects within an image. The segmentation process may generate segmentation data used in a post processing step to quantify aspects of the specimen container 104 and/or the specimen 106, i.e., determine certain physical dimensional characteristics of the specimen container and/or the specimen 106, or constituents in the specimen 106, such as HIL, as described herein.

Additional reference is now made to FIGS. 2A and 2B. FIG. 2A illustrates a side view of the specimen container 104 including the specimen 106 according to one or more embodiments. FIG. 2B illustrates a side view of the specimen container 104 of FIG. 2A located within a carrier 124. The specimen 106 may include a gel separator 252 that separates a serum or plasma portion 206SP of the specimen 106 from a settled blood portion 206SB of the specimen 106. An air gap 254 may be located above the serum or plasma portion 206SP and a line of demarcation between the air gap 254 and the serum or plasma portion 206SP is defined as the liquid-air interface (LA). In some embodiments, the air gap 254 may be a vacuum or a void. The cap 140 may seal the specimen container 104.

The physical characteristics at least partially determined by segmentation may include the location of the top (TC) of the specimen container 104, the height (HT) of the specimen container 104, the width (W) of the specimen container 104, the interior width (Wi) of the specimen container 104, and the thickness (Tw) of the wall of the tube 138. In addition, the segmentation data may provide the location of the liquid-air interface (LA), the total height (HTOT) of the specimen 106, and an upper location (GU) and a lower location (GL) of the gel separator 252. The difference between the upper location (GU) and the lower location (GL) provides the height (HG) of the gel separator 252. The characteristics may further include the height (HSP) of the serum or plasma portion 206SP and the height (HSB) of the settled blood portion 206SB. The segmentation may also provide the size and locations of the cap 140, the air gap 254, the serum or plasma portion 206SP, the gel separator 252, the settled blood portion 206SB, the specimen container 104, and the carrier 124. Segmentation may also include estimating a volume of the serum or plasma portion 206SP and/or a volume of the settled blood portion 206SB, and possibly a ratio there between. Other quantifiable geometrical features and locations of other objects may also be determined, such as the color of various components, such as the cap 140, or the type of cap 140.

In some embodiments, the specimen container 104 may be provided with the label 134, which may include identification information 234i (i.e., indicia) thereon, such as a barcode, alphabetic, numeric, or combinations thereof. The identification information 234i may be machine-readable at various locations including at the quality check module 102 (FIG. 1A). The machine-readable identification information 234i may be darker (e.g., black) than the label material (e.g., white) so that the identification information 234i can be readily imaged. The identification information 234i may indicate, or may otherwise be correlated, via a Laboratory Information System (LIS), to a patient's identification as well as tests to be performed on the specimen 106. The identification information 234i may indicate other or additional information.

The above-described identification information 234i may be provided on the label 134, which may be adhered to or otherwise provided on an outside surface of the specimen container 104. As shown in FIGS. 2A and 2B, the label 134 may not extend all the way around the specimen container 104 or all along a length of the specimen container 104 such that from the particular front viewpoint shown, a large part of a serum or plasma portion 206SP is viewable and unobstructed by the label 134. In some embodiments, multiple labels may have been provided (such as from multiple facilities that have handled the specimen container 104), and the multiple labels may overlap each other to some extent. For example, two labels (e.g., a manufacturer's label and a barcode label) may be provided and may be overlapping and may occlude (obstruct) some or all of one or more viewpoints. The segmentation processes described herein may identify and locate the label(s) 134 on the specimen container 104 and may also provide the shape and/or size of the label(s) 134. The segmentation processes described herein may also determine whether the label(s) is damaged or otherwise unreadable. In some embodiments, the segmentation process may include reading the label(s) 134.

Additional reference is made to FIG. 3, which illustrates a flowchart depicting a method 360 of processing that may be performed on the pixel data by the computer 136 or other suitable processor device. In functional block 362 of the method 360, the computer 136 receives pixel data representative of the specimen container 104. The pixel data can be image data of the specimen container 104. The pixel data may also be representative of the carrier 124 holding the specimen container 104 and/or the specimen 106 located in the specimen container 104. In some embodiments, the computer 136 may cause mechanisms (not shown) to move the track 122 or the carrier 124 on the track 122 to the imaging location 144 within the housing 146. The computer 136 may then generate and transmit signals to the light sources 152A-152C, which cause the light sources 152A to illuminate the specimen container 104 and/or the carrier 124 as described above. For example, the signals generated by the computer 136 and transmitted to the light sources 152A-152C may cause the light sources 152A-152C to generate specific intensities and wavelengths of light as described above.

In more detail, when the specimen container 104 and/or the carrier 124 is illuminated, the computer 136 may generate and transmit signals via the communication lines 148A-148C to the image capture devices 142A-142C causing the image capture devices 142A-142C to capture images of the specimen container 104 and/or the carrier 124. The signals generated and transmitted by the computer 136 to the image capture devices 142A-142C may cause individual image capture devices 142A-142C to capture images of the specimen container 104 and or the carrier 124. In other embodiments, the signals generated and transmitted by the computer 136 may cause the image capture devices 142A-142C to simultaneously or sequentially capture images of the specimen container 104 and/or the carrier 124. When the image capture devices 142A-142C capture the images, the image capture devices 142A-142C generate the pixel data (otherwise referred to as "image data") representative of the captured images, wherein pixel values refer to numerical values (e.g., intensity and/or wavelength values) of individual pixels in the pixel data. Sometimes, the term "pixel" refers to a pixel value in the pixel data. As shown in FIG. 1B, the image capture devices 142A-142C are arranged around the image location 144, wherein the specimen container 104 may be centrally located therein. Thus, the cumulative pixel data generated by the image capture devices 142A-142C may be representative of a 360° view of the specimen container 104 and/or the carrier 124. The pixel data generated by the image capture devices 142A-142C may be transmitted to the computer 136 via the communication lines 148A-148C.

The computer 136 may process the pixel data by using programs executing on the computer 136. In functional block 364, neural networks executing on the computer 136 may segment one or more images captured by the image capture devices 142A-142C into one or more objects as described in greater detail below. The one or more neural networks can comprise convolutional neural networks (CNNs), segmentation convolutional neural networks (SCNNs), deep semantic segmentation networks (DSSN), and other like segmentation neural networks. For example, the segmenting programs executing on the computer 136 may process or segment the pixel data to identify classes of pixels. Classes of pixels are pixels that have the same or similar characteristics. For example, a class of pixels may have pixel values of the same or similar wavelengths, intensities, and/or regional locations. Different classes of pixels may be located in different regions of an image corresponding to different objects constituting the specimen container 104 and/or the carrier 124. Individual classes of pixels of a single object may have similar colors and may be located proximate one another. For example, classes of pixels representative of the cap 140 may be in locations of the cap 140 and may all have close to the same color (e.g., wavelength of light). Likewise, classes of pixels representative of the specimen 106 may have certain colors and be located proximate one another within a region defined as the specimen container.

In some embodiments, each pixel in an image is assigned a class, such as by any suitable classification process. For example, pixels of a first wavelength may be assigned to a first class (e.g., the cap) and pixels of a second wavelength may be assigned to a second class (e.g., the serum or plasma portion). Other criteria, such as intensity, may be used to assign pixels to different classes.

The segmentation and identification may be performed by neural networks (e.g., trained neural networks) executing on the computer 136 (FIG. 1B). For example, the above-described SCNN may include a DSSN that includes, in some embodiments, more than 100 operational layers. A benefit of having such a deep network is that it may increase the network reception field, which utilizes more context information rather than small local regions. Moreover, the densely-connected network concatenates the features from low level to high level layers as well as from encoding to decoding regions. By doing so, the DSSN can be trained more easily to recognize more detailed features from the image than other convolutional neural networks configured for the same task. The SCNN may include other neural networks.

To overcome appearance differences that may be caused by variations in specimen container type (e.g., size and/or shape), the SCNN may include a small container segmentation network (SCN) at the front end of the DSSN. The SCN may be configured and operative to determine a container type and a container boundary. The container type and container boundary information may be input via an additional input channel to the DSSN and, in some embodiments, the SCNN may provide, as an output, the determined container type and boundary. In some embodiments, the SCN may have a similar network structure as the DSSN, but shallower (i.e., with far fewer layers).

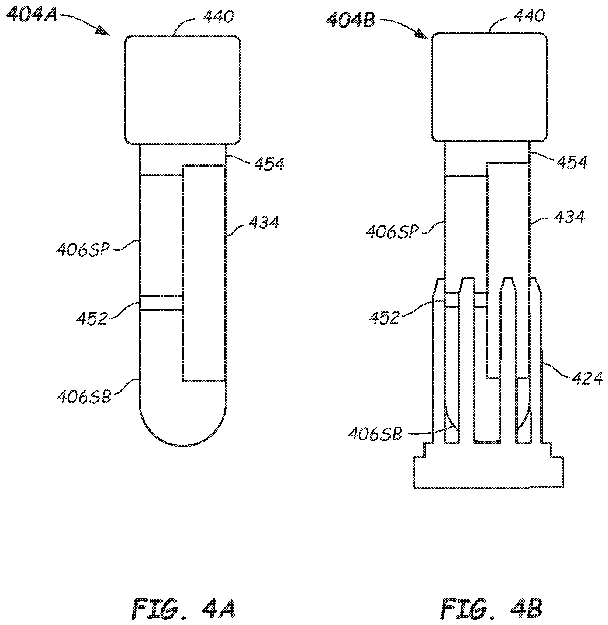

Additional reference is made to FIGs. 4A and 4B, which illustrate examples of locations of classes of pixels that correspond to various objects in the images. In some instances, not all classes of pixels will correspond to an object. A first segmented image 404A illustrates an example of classes of pixels and their corresponding objects from the image shown in FIG. 2A. A second segmented image 404B illustrates an example of classes of pixels and their corresponding objects from the image shown in FIG. 2B. In the embodiments of FIGS. 4A and 4B, programs, such as one or more neural networks, executing on the computer 136 have processed and segmented the image data into groups of pixels, such as by classes. As described in greater detail below, the classes of pixels may correspond to the locations of objects constituting the specimen container 104 (including tube 138 and cap 140) and/or the carrier 124 and/or the components of the specimen 106. The classes may refer to other objects in the captured image(s).

In the embodiments of FIGS. 4A and 4B, the programs executing on the computer 136 (FIG. 1B) have identified a plurality of pixel classes that may correspond to a plurality of objects. The computer 136 may now identify one or more objects defined by the one or more classes of pixels as described in functional block 366 (FIG. 3) and the boundaries thereof. The segmented objects depicted in FIGS. 4A and 4B include areas and boundaries of a segmented cap 440, a segmented air gap 454, a segmented label 434, a segmented serum or plasma portion 406SP, a segmented gel separator 452, and a segmented settled blood portion 406SB. The image of FIG. 4B further includes a segmented carrier 424. The identification process may identify fewer or more objects or classes of pixels than those shown in FIGs. 4A and 4B.

The identification process may be performed by neural networks, such as convolutional neural networks (CNNs) and other programs executing in the computer 136, which are described above. As an example, the programs executing in the computer 136 may identify the class or classes of pixels constituting the segmented cap 440 as the cap 140 (FIGs. 2A-2B). In addition, the programs may identify the color and/or other physical characteristics of the cap 140, such as a cap type and/or cap dimensions. In some embodiments, the programs may identify the segmented label 434 as the label 134 (FIG. 2A). In some embodiments, the programs may read the identification information 234i located on the label 134. In some embodiments, the programs may identify the physical condition of the label 134 to determine if the label 134 is damaged or unreadable.

In some embodiments, the programs executing on the computer 136 may identify the class(s) of pixels constituting the segmented serum or plasma portion 406SP as the serum or plasma portion 206SP (FIGS. 2A and 2B). In some embodiments, the programs executing on the computer 136 may further process the pixel data constituting the segmented serum or plasma portion 406SP to analyze the serum or plasma portion 206SP and determine whether the serum or plasma portion 206SP contains an interferent, such as hemolysis, icterus, and/or lipemia or is normal N. The programs executing on the computer 136 may further determine an index of hemolysis, icterus, and/or lipemia in the serum or plasma portion 206SP, if present.

The computer 136 may output information to a user regarding identification of the objects. For example, the computer 136 may output information to a user indicating whether the specimen container 104 includes a cap 140, the color of the cap 140, and the type of cap. Likewise, the computer 136 may output information indicating whether the serum or plasma portion 206SP (FIGS. 2A and 2B) includes an interferent such as, hemolysis, icterus, and/or lipemia and classifications of the interferents. In some embodiments, the computer 136 may output information related to the condition of the label 134.

In order to improve the confidence of the identifications made by the computer 136 and programs executing therein, the computer 136 may generate signals to display an image of the specimen container 104 on the display 150 with delineated locations constituting selected objects of the specimen container 104 as described in functional block 368 of FIG. 3. The image displayed on the display 150 may also include delineated locations constituting the carrier 124. In some embodiments, the computer 136 may be operative to overlay an activation map over an image of the specimen container 104. In such embodiments, the color and/or brightness of pixels in the activation map may be proportional to a weighting or usefulness of the original pixels used by the computer 136 to identify objects.

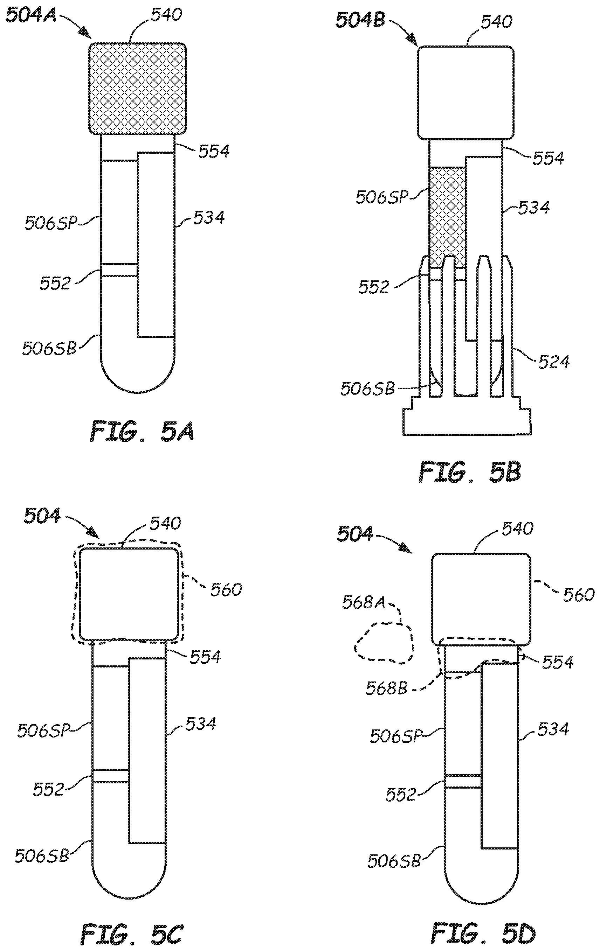

Additional reference is made to FIGs. 5A, 5B, 5C, and 5D which illustrate representations of the specimen container 104 that may be displayed on the display 150 (FIG. 1B). Display 150 may be an OLED, LED, LCD, plasma, CRT, or the like. Other suitable displays may be used. FIG. 5A illustrates an embodiment of a displayed specimen container 504A and segmented objects of the first segmented image 404A of FIG. 4A. FIG. 5B illustrates an embodiment of a displayed specimen container 504B and segmented objects of the second segmented image 404B of FIG. 4B, which includes a displayed carrier 524. FIG. 5C illustrates an embodiment of a displayed image including an image of the displayed specimen container 504 with an overlaid activation map wherein programs executing on the computer 136 (FIG. 1) used pixels in a correct region of the image to properly identify the cap 540 (FIG. 1). FIG. 5D illustrates an embodiment of a displayed image including an image of the displayed specimen container 504 with an overlaid activation map wherein programs executing on the computer 136 did not use pixels in a correct region of the image when attempting to identify the cap 140 (FIG. 1C).

In the embodiment of FIG. 5A, the programs executing on the computer 136 (FIG. 1B) have displayed the displayed cap 540, a displayed air gap 554, a displayed label 534, a displayed serum or plasma portion 506SP, a displayed gel separator 552, and a displayed settled blood portion 506SB. In the embodiment of FIG. 5B, the programs executing on the computer 136 have additionally displayed the displayed carrier 524.

In the example described above, the programs executing on the computer 136 have identified the cap 140 (FIGs. 2A-2B) and may optionally provide information to the user regarding properties of the cap 140, such as cap color or cap type. In the embodiment of FIG. 5A, the displayed cap 540 is delineated by cross-hatching. Other delineations may be used, such as different colors, markings, shading, and/or fixed or variable intensities of the displayed objects. A name may be displayed on the display 150 adjacent to the delineated cap 540, such as "CAP." The delineated cap 540 shows the user where in the image of the specimen container 104 the pixel data was located that was used by the one or more neural networks to identify the cap 140. Because the identified and delineated object is the cap 140, the user can be confident that the one or more neural networks executing on the computer 136 correctly analyzed and segmented and/or classified the correct portion of the image of the specimen container 104. If the identified object and the displayed object are not the same, then the user can be confident that the neural networks executing on the computer 136 did not properly identify the object. For example, if the computer 136 identified the object as the serum or plasma portion 206SP, but displayed the delineated cap 540, the user may be not be confident that the neural networks executing on the computer 136 properly identified the serum or plasma portion 206SP.

The displayed specimen container 504B of FIG. 5B includes a delineated object representative of the serum or plasma portion 206SP. Specifically, the computer 136 may display an image of the specimen container 504B with a delineated location of pixels constituting a selected object of the specimen container 104. In this example, the selected object is the delineated serum or plasma portion 206SP. The neural networks executing on the computer 136 may analyze the pixel data within the serum or plasma portion 206SP to determine whether the serum or plasma portion 206SP includes hemolysis, icterus, and/or lipemia and the extent of the interferent(s). By delineating the serum or plasma portion 206SP in the displayed serum or plasma portion 506SP, the user may be confident that the correct portion of the image of the specimen container 104 was analyzed in making the interferent determinations. Should another object in the displayed specimen container 504B have been delineated, the user would not be confident that the interferent analysis is proper. Alongside delineating the serum or plasma portion 206SP, a designation as containing hemolysis, icterus, or lipemia, or as being normal may be displayed on the display 150. Index values may be optionally displayed.

In the embodiment of FIG. 5C, a displayed image of the specimen container 504 with an overlay of the activation image is shown, wherein the activation map is identified by dashed lines. In the embodiment of FIG. 5C, the one or more neural networks executing on the computer 136 (FIG. 1) identified the cap 140 (FIG. 1C). The activation map shows the pixels used by the one or more neural networks to make the cap determination. In some embodiments, the activation map includes different intensities of pixels and/or colors of pixels wherein the pixel intensities and/or colors are dependent on the usefulness or weighting of the pixels used by the one or more neural networks to make the cap determination. In the embodiment of FIG. 5C, the area 560, which is a part of the activation map, may include the pixels being the most useful in making the cap determination. The area 560 may have different colors and/or intensities than other pixels in the displayed image. A user viewing the displayed image, including the displayed cap 540, will know that the neural networks used pixels of the cap 140 or in regions of the cap 140 when the cap determination was made.

Reference is now made to FIG. 5D, which illustrates an embodiment of a displayed image including an image of the displayed specimen container 504 with an overlaid activation map wherein one or more neural networks executing on the computer 136 (FIG. 1) did not use the correct pixels when attempting to identify the cap 140. In the embodiment of FIG. 5D, pixels used by the one or more neural networks to make the cap determination are in two groups. A first group 568A is an artifact outside of the image boundary of the displayed specimen container 504 and the second group 568B is in the displayed air gap 554. When the displayed image of FIG. 5D is presented to a user, the user can be assured that the cap identification is in error. For example, none of the pixels representative of the cap 140 were used to make the cap determination.

In some embodiments one or more selected objects are displayed as a confidence gradient (or level). For example, the identification process may be based on a voting or other criteria when an object is identified. The confidence gradient may be incorporated into the displayed objects to indicate the degree of confidence. For example, if the neural networks executing on the computer 136 (FIG. 1B) determine with an 80% certainty that the segmented cap 440 (FIG. 4A) is the cap 140 (FIGS. 2A-2B), the displayed cap 540 may indicate this confidence gradient. For example, the displayed cap 540 may include an adjacent text indicating the 80% confidence gradient. In other embodiments, a color, hatching, and/or display intensity may indicate the level of confidence. The various objects may be displayed sequentially or as requested, such as by the user selecting from a drop down menu or the like.

In some embodiments, one or more images displayed on the display 150 include overlaying images representing the one or more objects over an image at least partially representing the specimen container 104. In such embodiments, locations of the objects are in locations of their respective pixels relative to the image at least partially representing a best view of the specimen container 104. For example, the best view may include the most exposed area of the serum or plasma portion 206SP.

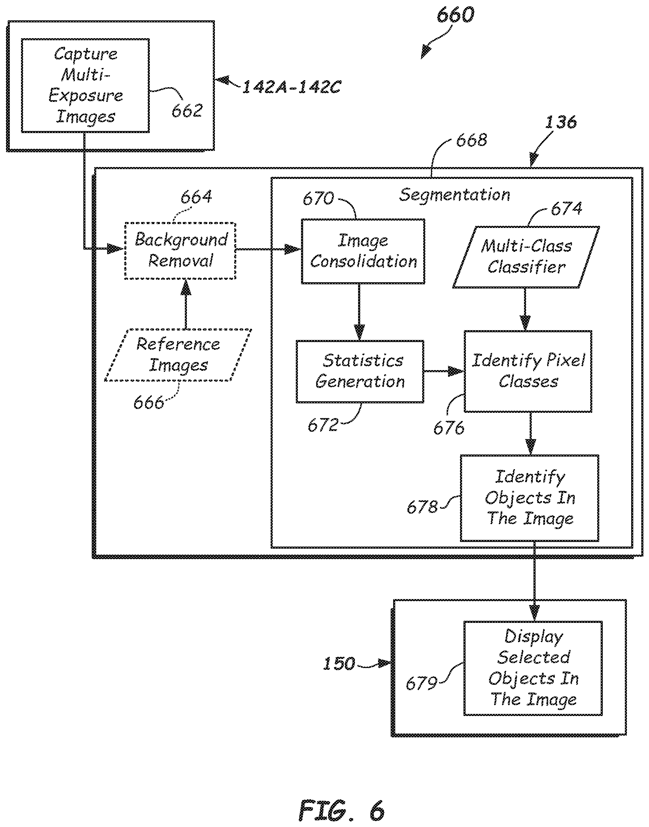

A simple apparatus and functional flow chart of a segmentation method 660 according to one or more embodiments is shown in FIG. 6. The segmentation method 660 described herein may be performed by programs executing on the computer 136 (FIG. 1B), such as the neural networks and other algorithms described above. Multiple images of the specimen container 104 (FIGs. 2A and 2B) are captured at 662 by the image capture devices 142A-142C. The multiple images may be multi-spectral images captured at multiple different exposures and at multiple different wavelength spectra and from multiple viewpoints 1-3, as described above. Digital image data of the multiple images may be stored in memory of the computer 136 (FIG. 1B). From this image data, a background may optionally be subtracted in a background reduction phase in 664 executing on the computer 136 to lower computational burden of the computer 136. The background may be portions of the image data other than those associated with the specimen container 104. Background reduction may be accomplished by subtracting reference images previously captured in 666 without the specimen container 104 or by other suitable background elimination methods.

After image capture, and optional background reduction in 664, segmentation may be undertaken in 668 by computer 136. The segmentation in 668 may include an image consolidation process that is undertaken in 670. During the image consolidation process in 670, the various exposure time images at each color spectra (R, G, B, white light, NIR and/or IR) and for each image capture device 142A-142C may be reviewed pixel by pixel to determine those pixels that have been optimally exposed. For each corresponding pixel location, the best of any optimally-exposed pixel is selected and included in an optimally-exposed image data set. Thus, following image consolidation in 670, there may be produced one optimally-exposed image data set for each spectrum and for each image capture device 142A-142C.

Following image consolidation in 670 or possibly concurrent therewith, a statistics generation process may be undertaken in 672, where statistics are generated for each pixel, such as mean and/or covariance matrix. This statistical data on the optimally-exposed data sets are then operated on by a multi-class classifier 674 to provide identification of the pixel classes present in the images in 676. The final class for each pixel may be determined my maximizing confidence values for each pixel. For each pixel location, a statistical description may be extracted within a pixel (e.g., a small super-pixel patch (e.g. 11x11 pixels)). Each super-pixel patch may provide a descriptor, which is considered in a training and evaluation process. The classifiers may operate on feature descriptors and use class labels for training and output class labels during testing/evaluation.

From the segmentation process of 668, each pixel in a consolidated image for each of the image capture devices 142A-142C is given a classification as one of a plurality of class types in 676. Class types may be liquid (serum or plasma portion 106SP), settled blood portion 106SB, tube 138, label 134, cap 140, gel separator 252, air gap 254A, for example. From this segmentation information, the objects associated with the above-described classes may be identified in 678. This may be performed by collecting together all the pixels (or pixel patches) of the same classification. In 679, the selected object can be displayed on display 150. For example, the selected objects can be displayed by user selection, or by displaying the objects in a sequence, such as a predetermined or selected sequence. For example, the delineated objects can be displayed in the order of: delineated cap 540, delineated label 534, delineated serum or plasma portion 506SP, delineated gel separator 552, delineated settled blood portion 506SB, delineated air gap 554, or even delineated carrier 524, or any other suitable order or subset thereof.

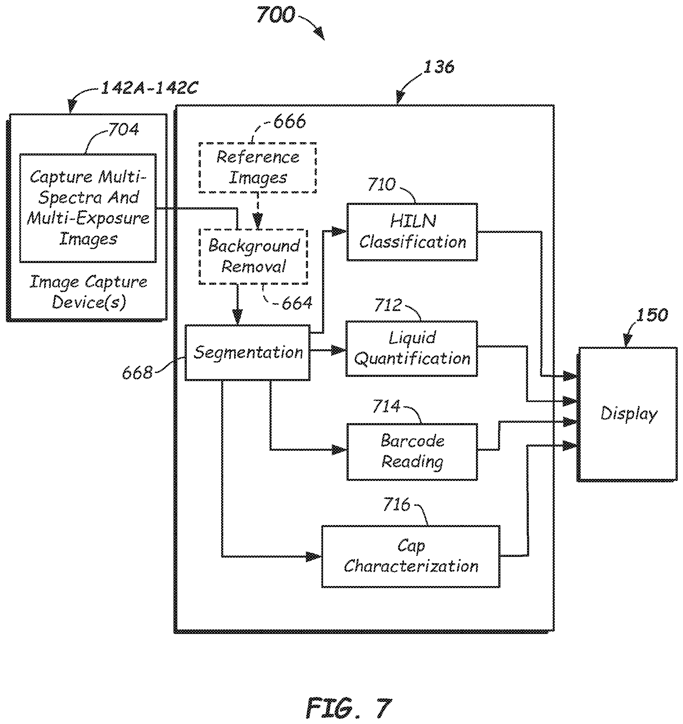

FIG. 7 illustrates a flowchart of a characterization method 700 wherein many items may be characterized or classified by the broader characterization method 700 using the quality check module 102 (FIG. 1A). According to one or more embodiments of the characterization method 700, images are captured, such as by multiple image capture devices 142A-142C, in 704. The images captured by the image capture devices 142A-142C may be multi-spectral (e.g., RGB, W, NIR, IR) and multi-exposure images, as discussed above. In particular, multiple exposures (e.g., 4-8 exposures) may be captured for each wavelength spectrum of light used in 704. The respective images at each exposure for each of the image capture devices 142A-142C may be obtained sequentially using the multiple image capture devices 142A-142C and backlight light sources 152A-152C as described in FIGs. 1B-1C, for example. The images may then be optionally processed in 664 to remove background using reference images 666, as described above in optional background removal method of FIG. 6. The images may then be further processed to determine segmentation in 668 in the manner described above in FIG. 6, or by any other suitable segmentation method.

After the segmentation in 668, different objects and characteristics of the specimen 106 (FIGs. 2A and 2B) and the specimen container 104 may be identified and presented to a user. For example, an image presented to a user may include an image of the specimen container 104 with the overlaid activation map. As described above, the display 150 may identify locations on the specimen container 104 where pixels used by one or more neural networks to make the above-described determinations and/or identifications are located. Identification of an HILN (hemolysis, icterus, lipemia, and/or normal) classification may be performed in 710. For example, the computer 136 may analyze the segmented serum or plasma portion 406SP and characterize the serum or plasma portion 206SP (FIGs. 2A and 2B) accordingly. The characterization and/or the locations of the pixels used in the characterization may be displayed on the display 150.

Liquid quantification may be carried out in 712 following segmentation in 668. Liquid quantification in 712 may involve the determination of certain physical and/or dimensional characteristics of the specimen 106 (FIGs. 2A-2B), such as a physical location of the serum or plasma portion 206SP (FIGs. 2A-2B) and locations and values for LA, HG, GU, GL, HSP, HSB, HTOT, and/or HT. One or more of these values, volume estimate values, and/or locations may be displayed on the display 150 along with locations showing the locations of pixels used by one or more neural networks to determine the values and/or locations of the characteristics as described above. Other objects in the specimen 106 may be characterized, such as the gel separator 252 (FIGs. 2A-2B) and the air gap 254 (FIGs. 2A-2B).

The results of the segmentation in 668 can also be used to identify the label 134 and the location of the label 134 (FIGs. 2A-2B) in 714. Once identified, the label 134 can be read. For example, the label 134 may include the identification information 234i (FIGS. 2A-2B), such as a barcode, which may be read in 714 by a barcode reader embodied as software to read the image data. Label information, including the physical condition of the label 134 may be transmitted to the user and to a database. The display 150 may display locations of pixels used by one or more neural networks to analyze the label 134 as described above.

The characterization of the cap 140 (FIGs. 2A-2B) may be performed in 716. Characterization of the cap 140 my include determining whether the tube 138 (FIGs. 2A-2B) has a cap, and if so, determining the cap type and/or color of the cap 140. Cap information, including the cap type and color of the cap 140 may be displayed to the user. The display 150 may display locations of delineated pixels used to analyze the cap 140 as described above. For example, the activation map may be overlaid onto an image including the specimen container 104 to show a user the pixels that were used to identify the cap 140.

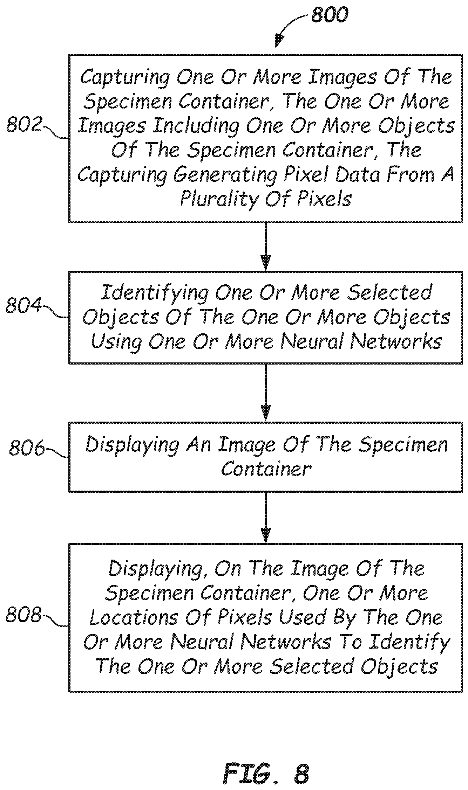

Additional reference is now made to FIG. 8, which illustrates a flowchart describing a method 800 of characterizing a specimen (e.g., specimen 106) in a specimen container (e.g., specimen container 104). The method 800 includes, in 802, capturing one or more images of the specimen container, the one or more images including one or more objects of the specimen container and specimen, the capturing generating pixel data from a plurality of pixels in the one or more images. The method includes, in 804, identifying one or more selected objects of the one or more objects using one or more neural networks. The method includes, in 806, displaying an image of the specimen container. The method includes, in 808, displaying, on the image of the specimen container, one or more locations of pixels used by the one or more neural networks to identify the one or more selected objects.

While the description is providing illustrative explanations, it should be understood that the scope of the invention is defined by the appended claims.

## Claims

1. A computer-implemented method of identifying objects of a transparent or translucent specimen container (104) containing a biological liquid, comprising:
capturing one or more images of the specimen container (104), the one or more images including one or more objects of the specimen container (104), the capturing generating pixel data for a plurality of pixels;
identifying in said one or more images one or more selected objects from the one or more objects using one or more neural networks, wherein identifying one or more selected objects is performed, at least in part, by at least one of a segmentation neural network and a classification network executed on a computer (136);
generating a class activation map (540, 568A, 568B) and overlaying the class activation map over the image of the specimen container; and
displaying to a user, on a display (150), an image of the specimen container (404A, 404B, 504A, 504B) overlaid with the class activation map such as to highlight to said user one or more locations (540, 506SP, 560, 568A, 568B) of pixels that were used by the one or more neural networks to identify the one or more selected objects, in order to enable said user to visually ascertain whether the neural networks analyzed a correct portion of said at least one image of the specimen container when identifying the one or more selected objects.

2. The method of claim 1, wherein the one or more selected objects is at least one of a cap (140), an air gap (254), a serum or plasma portion (206SP), a settled blood portion (206SB), and a gel separator.

3. The method of claim 1, further comprising segmenting (668) the one or more images into a plurality of pixel classes and wherein displaying comprises displaying an image showing one or more locations (540, 506SP, 560, 568A, 568B) of one or more pixels constituting one or more of pixel classes relative to the specimen container (104).

4. The method of claim 1, wherein displaying comprises displaying an image at least partially representing the specimen container (104), wherein the method further comprising overlaying one or more images (540, 506SP, 560, 568A, 568B) representing the one or more objects over an image at least partially representing the specimen container (104), wherein locations of the one or more objects are in locations of their respective pixels relative to the image at least partially representing the specimen container (104).

5. The method of claim 1, wherein identifying one or more selected objects from the one or more objects comprises identifying a cap (140), wherein the method further comprises identifying a color of the cap (140).

6. The method of claim 1, wherein identifying one or more selected objects from the one or more objects comprises identifying a label (134), wherein the method comprising reading the label (134) and identifying a physical condition of the label (134).

7. The method of claim 1, wherein identifying one or more selected objects from the one or more objects comprises identifying a serum or plasma portion (206SP), and wherein the method further comprising identifying an interferent in the serum or plasma region (206SP) and/or at least one of hemolysis, icterus, or lipemia in the serum or plasma region (206SP).

8. The method of claim 1, wherein identifying one or more selected objects comprises assigning a confidence level to one or more pixels used by the one or more neural networks to identify the one or more selected objects, and wherein displaying one or more locations (540, 506SP, 560, 568A, 568B) of pixels used by the one or more neural networks to identify the one or more selected objects comprises displaying, on the image of the specimen container (404A, 404B, 504A, 504B), one or more images indicating the confidence level of the one or more pixels used by the one or more neural networks to identify the one or more selected objects.

9. A quality check module, comprising:
one or more image capture devices (142A, 142B, 142C) operative to capture one or more images from one or more viewpoints (1, 2, 3) of a transparent or translucent specimen container (104) containing a biological liquid, wherein capturing one or more images generates pixel data for a plurality of pixels, wherein the one or more images include one or more objects of the specimen container (104); and
a computer (136) coupled to the one or more image capture devices (142A, 142B, 142C), the computer (136) configured and operative to:
identify in said one or more images one or more selected objects from the one or more objects of the specimen container (104) using one or more neural networks, wherein identifying one or more selected objects is performed, at least in part, by at least one of a segmentation neural network and a classification neural network;
wherein the computer (136) is also operative to generate a class activation map (540, 568A, 568B) and to overlay the class activation map over the image of the specimen container; and to
display to a user, on a display (150), an image of the specimen container (404A, 404B, 504A, 504B) overlaid with the class activation map such as to highlight to said user one or more locations (540, 506SP, 560, 568A, 568B) of pixels that were used by the one or more neural networks to identify the one or more selected objects, in order to enable said user to visually ascertain whether the neural networks analyzed a correct portion of said at least one image of the specimen container when identifying the one or more selected objects.

10. The quality check module of claim 9, wherein the one or more selected objects is at least one of a cap (140), an air gap (254), a serum or plasma portion (206SP), a settled blood portion (206SB), and a gel separator.

11. A specimen testing apparatus, said apparatus comprising:
a track (122);
a carrier (124) moveable on the track (122) and configured to contain a specimen container (104) containing a serum or plasma portion (206SP) of a specimen (106) therein;
the quality check module of claim 9, wherein the quality check module comprises said plurality of image capture devices (142A, 142B, 142C) arranged around the track (122) and is further operative to capture one or more images from one or more viewpoints (1, 2, 3) of the specimen container (104) and the serum or plasma portion (206SP) of the specimen (106).

## Patentansprüche

1. Computerimplementiertes Verfahren zum Identifizieren von Objekten eines transparenten oder transluzenten Probenbehälters (104), der eine biologische Flüssigkeit enthält, umfassend:
Erfassen eines oder mehrerer Bilder des Probenbehälters (104), wobei das eine oder die mehreren Bilder ein oder mehrere Objekte des Probenbehälters (104) beinhalten, wobei das Erfassen Pixeldaten für mehrere Pixel erzeugt;
Identifizieren eines oder mehrerer ausgewählter Objekte aus dem einen oder den mehreren Objekten in dem einen oder den mehreren Bildern unter Verwendung eines oder mehrerer neuronaler Netzwerke, wobei das Identifizieren eines oder mehrerer ausgewählter Objekte zumindest teilweise durch ein neuronales Segmentierungsnetzwerk und/oder ein Klassifizierungsnetzwerk, das auf einem Computer (136) ausgeführt wird, durchgeführt wird;
Erzeugen einer Klassenaktivierungskarte (540, 568A, 568B) und Überlagern der Klassenaktivierungskarte über dem Bild des Probenbehälters; und
Anzeigen, für einen Benutzer, auf einer Anzeige (150), eines Bildes des Probenbehälters (404A, 404B, 504A, 504B), das mit der Klassenaktivierungskarte überlagert ist, um für den Benutzer einen oder mehrere Orte (540, 506SP, 560, 568A, 568B) von Pixeln zu markieren, die durch das eine oder die mehreren neuronalen Netzwerke verwendet wurden, um das eine oder die mehreren ausgewählten Objekte zu identifizieren, um es dem Benutzer zu ermöglichen, visuell zu ermitteln, ob die neuronalen Netzwerke beim Identifizieren des einen oder der mehreren ausgewählten Objekte einen korrekten Teil des wenigstens einen Bildes des Probenbehälters analysiert haben.

2. Verfahren nach Anspruch 1, wobei das eine oder die mehreren ausgewählten Objekte wenigstens eines von einer Kappe (140), einem Luftspalt (254), einem Serum- oder Plasmaanteil (206SP), einem abgesetzten Blutanteil (206SB) und einem Gelseparator ist.

3. Verfahren nach Anspruch 1, ferner umfassend das Segmentieren (668) des einen oder der mehreren Bilder in mehrere Pixelklassen, und wobei das Anzeigen das Anzeigen eines Bildes umfasst, das einen oder mehrere Orte (540, 506SP, 560, 568A, 568B) eines oder mehrerer Pixel zeigt, die eine oder mehrere Pixelklassen in Bezug auf den Probenbehälter (104) bilden.

4. Verfahren nach Anspruch 1, wobei das Anzeigen das Anzeigen eines Bildes umfasst, das den Probenbehälter (104) zumindest teilweise repräsentiert, wobei das Verfahren ferner das Überlagern eines oder mehrerer Bilder (540, 506SP, 560, 568A, 568B), die das eine oder die mehreren Objekte repräsentieren, über einem Bild umfasst, das den Probenbehälter (104) zumindest teilweise repräsentiert, wobei sich Orte des einen oder der mehreren Objekte an Orten ihrer jeweiligen Pixel in Bezug auf das Bild befinden, das den Probenbehälter (104) zumindest teilweise repräsentiert.

5. Verfahren nach Anspruch 1, wobei das Identifizieren eines oder mehrerer ausgewählter Objekte aus dem einen oder den mehreren Objekten das Identifizieren einer Kappe (140) umfasst, wobei das Verfahren ferner das Identifizieren einer Farbe der Kappe (140) umfasst.

6. Verfahren nach Anspruch 1, wobei das Identifizieren eines oder mehrerer ausgewählter Objekte aus dem einen oder den mehreren Objekten das Identifizieren eines Etiketts (134) umfasst, wobei das Verfahren das Lesen des Etiketts (134) und das Identifizieren eines physischen Zustands des Etiketts (134) umfasst.

7. Verfahren nach Anspruch 1, wobei das Identifizieren eines oder mehrerer ausgewählter Objekte aus dem einen oder den mehreren Objekten das Identifizieren eines Serum- oder Plasmaanteils (206SP) umfasst und wobei das Verfahren ferner das Identifizieren eines Interferenten in der Serum- oder Plasmaregion (206SP) und/oder von wenigstens einem von Hämolyse, Ikterus oder Lipämie in der Serum- oder Plasmaregion (206SP) umfasst.

8. Verfahren nach Anspruch 1, wobei das Identifizieren eines oder mehrerer ausgewählter Objekte das Zuweisen eines Konfidenzniveaus zu einem oder mehreren Pixeln umfasst, die durch das eine oder die mehreren neuronalen Netzwerke verwendet werden, um das eine oder die mehreren ausgewählten Objekte zu identifizieren, und wobei das Anzeigen eines oder mehrerer Orte (540, 506SP, 560, 568A, 568B) von Pixeln, die durch das eine oder die mehreren neuronalen Netzwerke verwendet werden, um das eine oder die mehreren ausgewählten Objekte zu identifizieren, das Anzeigen eines oder mehrerer Bilder, die das Konfidenzniveau des einen oder der mehreren Pixel angeben, die durch das eine oder die mehreren neuronalen Netzwerke verwendet werden, um das eine oder die mehreren ausgewählten Objekte zu identifizieren, auf dem Bild des Probenbehälters (404A, 404B, 504A, 504B) umfasst.

9. Qualitätskontrollmodul, umfassend:
eine oder mehrere Bilderfassungsvorrichtungen (142A, 142B, 142C), die betreibbar sind, um aus einem oder mehreren Blickwinkeln (1, 2, 3) ein oder mehrere Bilder eines transparenten oder transluzenten Probenbehälters (104), der eine biologische Flüssigkeit enthält, zu erfassen, wobei das Erfassen eines oder mehrerer Bilder Pixeldaten für mehrere Pixel erzeugt, wobei das eine oder die mehreren Bilder ein oder mehrere Objekte des Probenbehälters (104) beinhalten; und
einen Computer (136), der mit der einen oder den mehreren Bilderfassungsvorrichtungen (142A, 142B, 142C) gekoppelt ist, wobei der Computer (136) hierzu ausgelegt und betreibbar ist:
Identifizieren eines oder mehrerer ausgewählter Objekte aus dem einen oder den mehreren Objekten des Probenbehälters (104) in dem einen oder den mehreren Bildern unter Verwendung eines oder mehrerer neuronaler Netzwerke, wobei das Identifizieren eines oder mehrerer ausgewählter Objekte zumindest teilweise durch ein neuronales Segmentierungsnetzwerk und/oder ein neuronales Klassifizierungsnetzwerk durchgeführt wird;
wobei der Computer (136) auch betreibbar ist, um eine Klassenaktivierungskarte (540, 568A, 568B) zu erzeugen und die Klassenaktivierungskarte über das Bild des Probenbehälters zu legen; und zum
Anzeigen, für einen Benutzer, auf einer Anzeige (150), eines Bildes des Probenbehälters (404A, 404B, 504A, 504B), das mit der Klassenaktivierungskarte überlagert ist, um für den Benutzer einen oder mehrere Orte (540, 506SP, 560, 568A, 568B) von Pixeln zu markieren, die durch das eine oder die mehreren neuronalen Netzwerke verwendet wurden, um das eine oder die mehreren ausgewählten Objekte zu identifizieren, um es dem Benutzer zu ermöglichen, visuell zu ermitteln, ob die neuronalen Netzwerke beim Identifizieren des einen oder der mehreren ausgewählten Objekte einen korrekten Teil des wenigstens einen Bildes des Probenbehälters analysiert haben.

10. Qualitätskontrollmodul nach Anspruch 9, wobei das eine oder die mehreren ausgewählten Objekte wenigstens eines von einer Kappe (140), einem Luftspalt (254), einem Serum- oder Plasmaanteil (206SP), einem abgesetzten Blutanteil (206SB) und einem Gelseparator ist.

11. Probentesteinrichtung, wobei die Einrichtung dies umfasst:
eine Schiene (122);
einen Träger (124), der auf der Schiene (122) bewegt werden kann und dazu ausgelegt ist, einen Probenbehälter (104) zu enthalten, welcher einen Serum- oder Plasmaanteil (206SP) einer darin befindlichen Probe (106) enthält;
Qualitätskontrollmodul nach Anspruch 9, wobei das Qualitätskontrollmodul die mehreren Bilderfassungsvorrichtungen (142A, 142B, 142C) umfasst, die um die Schiene (122) angeordnet sind, und ferner betreibbar ist, um aus einem oder mehreren Blickwinkeln (1, 2, 3) ein oder mehrere Bilder des Probenbehälters (104) und des Serum- oder Plasmaanteils (206SP) der Probe (106) zu erfassen.

## Revendications

1. Procédé implémenté par ordinateur pour identifier des objets d'un récipient d'échantillon (104) transparent ou translucide contenant un liquide biologique, comprenant les étapes consistant à :
capturer une ou plusieurs images du récipient d'échantillon (104), la ou les images comprenant un ou plusieurs objets du récipient d'échantillon (104), la capture générant des données de pixels pour une pluralité de pixels ;
identifier dans ladite ou lesdites images un ou plusieurs objets sélectionnés parmi ledit ou lesdits objets à l'aide d'un ou plusieurs réseaux neuronaux, dans lequel l'identification d'un ou plusieurs objets sélectionnés est effectuée, au moins en partie, par au moins l'un d'un réseau neuronal de segmentation et d'un réseau de classification exécuté sur un ordinateur (136) ;
générer une carte d'activation de classe (540, 568A, 568B) et superposer la carte d'activation de classe sur l'image du récipient d'échantillon ; et
afficher à un utilisateur, sur un écran (150), une image du récipient d'échantillon (404A, 404B, 504A, 504B) superposée à la carte d'activation de classe de manière à mettre en évidence pour ledit utilisateur un ou plusieurs emplacements (540, 506SP, 560, 568A, 568B) de pixels qui ont été utilisés par le ou les réseaux neuronaux pour identifier le ou les objets sélectionnés, afin de permettre audit utilisateur de vérifier visuellement si les réseaux neuronaux ont analysé une portion correcte de ladite au moins une image du récipient d'échantillon lors de l'identification du ou des objets sélectionnés.

2. Procédé de la revendication 1, dans lequel le ou les objets sélectionnés sont au moins un élément parmi un bouchon (140), un espace d'air (254), une portion de sérum ou de plasma (206SP), une portion de sang décanté (206SB) et un séparateur de gel.

3. Procédé de la revendication 1, comprenant en outre la segmentation (668) de la ou des images en une pluralité de classes de pixels et dans lequel l'affichage comprend l'affichage d'une image montrant un ou plusieurs emplacements (540, 506SP, 560, 568A, 568B) d'un ou plusieurs pixels constituant une ou plusieurs classes de pixels par rapport au récipient d'échantillon (104).

4. Procédé de la revendication 1, dans lequel l'affichage comprend l'affichage d'une image représentant au moins partiellement le récipient d'échantillon (104), dans lequel le procédé comprenant en outre la superposition d'une ou plusieurs images (540, 506SP, 560, 568A, 568B) représentant le ou les objets sur une image représentant au moins partiellement le récipient d'échantillon (104), dans lequel les emplacements du ou des objets sont dans des emplacements de leurs pixels respectifs par rapport à l'image représentant au moins partiellement le récipient d'échantillon (104).

5. Procédé de la revendication 1, dans lequel l'identification d'un ou de plusieurs objets sélectionnés parmi le ou les objets comprend l'identification d'un bouchon (140), dans lequel le procédé comprend en outre l'identification d'une couleur du bouchon (140).

6. Procédé de la revendication 1, dans lequel l'identification d'un ou plusieurs objets sélectionnés parmi le ou les objets comprend l'identification d'une étiquette (134), dans lequel le procédé comprend la lecture de l'étiquette (134) et l'identification de l'état physique de l'étiquette (134).

7. Procédé de la revendication 1, dans lequel l'identification d'un ou plusieurs objets sélectionnés parmi le ou les objets comprend l'identification d'une portion de sérum ou de plasma (206SP), et dans lequel le procédé comprend en outre l'identification d'un interférent dans la région de sérum ou de plasma (206SP) et/ou au moins un élément parmi l'hémolyse, l'ictère ou la lipémie dans la région de sérum ou de plasma (206SP).

8. Procédé de la revendication 1, dans lequel l'identification d'un ou plusieurs objets sélectionnés comprend l'attribution d'un niveau de confiance à un ou plusieurs pixels utilisés par le ou les réseaux neuronaux pour identifier le ou les objets sélectionnés, et dans lequel l'affichage d'un ou plusieurs emplacements (540, 506SP, 560, 568A, 568B) des pixels utilisés par le ou les réseaux neuronaux pour identifier le ou les objets sélectionnés, consiste à afficher, sur l'image du récipient d'échantillon (404A, 404B, 504A, 504B), une ou plusieurs images indiquant le niveau de confiance du ou des pixels utilisés par le ou les réseaux neuronaux pour identifier le ou les objets sélectionnés.

9. Module de contrôle de qualité comprenant
un ou plusieurs dispositifs de capture d'images (142A, 142B, 142C) opérationnel pour capturer une ou plusieurs images à partir d'un ou plusieurs points de vue (1, 2, 3) d'un récipient d'échantillon transparent ou translucide (104) contenant un liquide biologique, dans lequel la capture d'une ou plusieurs images génère des données de pixels pour une pluralité de pixels, dans lequel la ou les images comprennent un ou plusieurs objets du récipient d'échantillon (104) ; et
un ordinateur (136) couplé au ou aux dispositifs de capture d'images (142A, 142B, 142C), l'ordinateur (136) étant configuré et opérationnel pour :
identifier dans ladite ou lesdites images un ou plusieurs objets sélectionnés parmi le ou les objets du récipient d'échantillon (104) à l'aide d'un ou plusieurs réseaux neuronaux, dans lequel l'identification d'un ou plusieurs objets sélectionnés est effectuée, au moins en partie, par au moins un réseau neuronal de segmentation et un réseau neuronal de classification ;
dans lequel l'ordinateur (136) est également opérationnel de générer une carte d'activation de classe (540, 568A, 568B) et de superposer la carte d'activation de classe sur l'image du récipient d'échantillon ; et
à afficher à un utilisateur, sur un écran (150), une image du récipient d'échantillon (404A, 404B, 504A, 504B) superposée à la carte d'activation de classe de manière à mettre en évidence pour ledit utilisateur un ou plusieurs emplacements (540, 506SP, 560, 568A, 568B) des pixels qui ont été utilisés par le ou les réseaux neuronaux pour identifier le ou les objets sélectionnés, afin de permettre audit utilisateur de vérifier visuellement si les réseaux neuronaux ont analysé une portion correcte de ladite au moins une image du récipient d'échantillon lors de l'identification du ou des objets sélectionnés.

10. Module de contrôle de qualité de la revendication 9, dans lequel le ou les objets sélectionnés est au moins un des éléments suivants : un bouchon (140), un espace d'air (254), une portion de sérum ou de plasma (206SP), une portion de sang décanté (206SB) et un séparateur de gel.

11. Appareil d'essai d'échantillon, ledit appareil comprenant :
une piste (122) ;
un support (124) mobile sur la piste (122) et configuré pour contenir un récipient d'échantillon (104) contenant une portion de sérum ou de plasma (206SP) d'un échantillon (106) dans celui-ci ;
le module de contrôle de qualité de la revendication 9, dans lequel le module de contrôle de qualité comprend ladite pluralité de dispositifs de capture d'images (142A, 142B, 142C) disposés autour de la piste (122) et est en outre opérationnel capturer une ou plusieurs images à partir d'un ou plusieurs points de vue (1, 2, 3) du récipient d'échantillon (104) et de la portion de sérum ou de plasma (206SP) de l'échantillon (106).
